# EUROPEAN PATENT APPLICATION

(11) **EP 4 807 873 A1**
(43) Date of publication of application: **16.09.2026**
(21) Application number: 24899882.5
(22) Date of filing: 04.12.2024
(51) Int. Cl.: H01M 50/244

(54) **BATTERY PACK END PLATE, BATTERY CASE FRONT FRAME BEAM, BATTERY PACK, AND VEHICLE**

(30) Priority: 05.12.2023 CN 202311660513; 05.12.2023 CN 202311660481
(71) Applicant: Beijing Chehejia Automobile Technology Co., Ltd., Beijing 101300 (CN)
(72) Inventor: LIU, Yangbin, Beijing 101300 (CN); TAO, Ran, Beijing 101300 (CN)
(74) Representative: 2SPL Patentanwälte PartG mbB
(86) International application number: PCT/CN2024/136895
(87) International publication number: WO 2025/119244

(57) **Abstract**

A battery pack end plate, a battery case front frame beam, a battery pack, and a vehicle. The battery pack end plate comprises a body (10) and a reinforcing assembly (11), wherein the body (10) has a cavity; the reinforcing assembly (11) is arranged in the cavity and is connected to the inner wall of the cavity, and the reinforcing assembly (11) comprises a transverse reinforcing rib (112) and a longitudinal reinforcing rib **(111)** intersecting each other, and a first reinforcing boss (114) is provided at the intersection between the longitudinal reinforcing rib (111) and the transverse reinforcing rib (112). The battery pack end plate has high structural strength, good deformation resistance and a light weight.

## Description

### CROSS-REFERENCE TO RELATED APPLICATIONS

The present application is filed based on Chinese patent application No. 202311660513.0 filed on December 5, 2023 and Chinese patent application No. 202311660481.4 filed on December 5, 2023, and claims the priority of the Chinese patent applications, and the entire contents of the Chinese patent applications are incorporated herein by reference.

### FIELD

The present application relates to the technical field of vehicles, and in particular, to an end plate for a battery pack, a front frame beam for a battery case, a battery pack and a vehicle.

### BACKGROUND

A power battery system is one of the most important components in a new energy vehicle. With the development of new energy vehicles, the energy density requirement for power battery systems is getting higher and higher. Existing power battery systems generally include a case and a plurality of power battery modules arranged in the case. A power battery module includes a housing and a battery unit located in the housing. An end plate of a power battery module is a part of the housing of the power battery module, has a protective performance, and is used to protect the battery unit in the housing from external damage.

Since a cell expands, when a module end plate is squeezed by expansion of the cell, the end plate is liable to be damaged by squeezing. In the related art, the structural strength of the end plate is improved by increasing the thickness of the end plate or constructing reinforcement ribs. However, increasing the thickness of the end plate increases cost and the weight of the battery pack, and constructing reinforcement ribs to improve the structural strength also has many problems, for example, a connection portion of the reinforcement ribs is liable to cause connection fracture due to stress concentration.

### SUMMARY

A technical problem to be solved by the present application is to provide, in view of the deficiencies and shortcomings of the related art, an end plate for a battery pack, in which a transverse reinforcement rib and a longitudinal reinforcement rib crossing each other are arranged in a cavity of the end plate, and a reinforcing boss is arranged at an intersection of the transverse reinforcement rib and the longitudinal reinforcement rib. The transverse reinforcement rib and the longitudinal reinforcement rib crossing each other may improve the structural strength of a body to match and resist the expansion force of a cell. The first reinforcing boss arranged at the intersection may serve as a fixed support for the transverse reinforcement rib and the longitudinal reinforcement rib to further improve the structural strength of the body, and may also reduce stress at an intersecting position of the reinforcement ribs and reduce the risk of fracture of the reinforcement ribs.

An end plate for a battery pack of embodiments of the present application includes a body and a reinforcement assembly, in which the body has a cavity, the reinforcement assembly is arranged in the cavity and connected to an inner wall of the cavity, and the reinforcement assembly includes a transverse reinforcement rib and a longitudinal reinforcement rib crossing each other, and a first reinforcing boss arranged at an intersection of the longitudinal reinforcement rib and the transverse reinforcement rib.

In the end plate for a battery pack of embodiments of the present application, the body has the cavity, the reinforcement assembly includes the transverse reinforcement rib and the longitudinal reinforcement rib, the transverse reinforcement rib and the longitudinal reinforcement rib are both connected to an inner side wall of the cavity, and the first reinforcing boss is arranged at the intersection of the longitudinal reinforcement rib and the transverse reinforcement rib. Thus, the transverse reinforcement rib and the longitudinal reinforcement rib crossing each other may improve the structural strength of the body to match and resist the expansion force of the cell. The first reinforcing boss arranged at the intersection may serve as a fixed support for the transverse reinforcement ribs and the longitudinal reinforcement rib to further improve the structural strength of the body, and may also reduce stress at the intersecting position of the reinforcement ribs and reduce the risk of fracture of the reinforcement ribs.

In some embodiments, the reinforcement assembly further includes an oblique reinforcement rib, the oblique reinforcement rib is arranged between the first reinforcing boss and an inner side wall of the cavity, an extension direction of the oblique reinforcement rib forms an angle with an extension direction of the transverse reinforcement rib, and the extension direction of the oblique reinforcement rib forms an angle with an extension direction of the longitudinal reinforcement rib.

In some embodiments, a second reinforcing boss is arranged at a connection between the transverse reinforcement rib and the inner side wall of the cavity; and/or
a second reinforcing boss is arranged at a connection between the longitudinal reinforcement rib and the inner side wall of the cavity; and/or
a second reinforcing boss is arranged at a connection between the oblique reinforcement rib and the inner side wall of the cavity.

In some embodiments, the cavity has an opening, a fixing boss protruding toward the opening is arranged on an inner bottom wall of the cavity, and an end of the fixing boss facing away from the inner bottom wall of the cavity has a connecting hole.

In some embodiments, a support boss is further arranged on the inner bottom wall of the cavity, and an end of the support boss facing away from the inner bottom wall of the cavity protrudes out of the opening and is configured to support a cover plate of the battery pack.

In some embodiments, the support boss is connected to the reinforcement assembly, and/or the fixing boss is connected to the reinforcement assembly.

In some embodiments, the body includes a bottom plate and a peripheral plate connected to the bottom plate, the bottom plate and the peripheral plate form the cavity, and the peripheral plate includes two large surface side plates spaced apart in a longitudinal direction of the body and connection side plates connected to both ends of the two large surface side plates, two ends of the transverse reinforcement rib are respectively connected to the two large surface side plates, and two ends of the longitudinal reinforcement rib are respectively connected to the two connection side plates.

In some embodiments, the transverse reinforcement rib and the longitudinal reinforcement rib are perpendicular to and intersect with each other.

A battery pack of embodiments of the present application includes the end plate for a battery pack of the above embodiments.

In the battery pack of embodiments of the present application, by using the above end plate for a battery pack, the transverse reinforcement rib and the longitudinal reinforcement rib crossing each other are arranged in the cavity of the end plate, and the first reinforcing boss is arranged at the intersection of the transverse reinforcement rib and the longitudinal reinforcement rib. Thus, the transverse reinforcement rib and the longitudinal reinforcement rib crossing each other may improve the structural strength of the end plate to match and resist the expansion force of the cell. The first reinforcing boss arranged at the intersection may serve as a fixed support for the transverse reinforcement ribs and the longitudinal reinforcement rib to further improve the structural strength of the body, and may also reduce stress at the intersecting position of the reinforcement ribs and reduce the risk of fracture of the reinforcement ribs, and the battery pack has high structural stability.

A vehicle of embodiments of the present application includes the battery pack of the above embodiments.

In the vehicle of embodiments of the present application, by using the above battery pack, the transverse reinforcement rib and the longitudinal reinforcement rib crossing each other are arranged in the cavity of the end plate of the battery pack, and the first reinforcing boss is arranged at the intersection of the transverse reinforcement rib and the longitudinal reinforcement rib. Thus, the transverse reinforcement rib and the longitudinal reinforcement rib crossing each other may improve the structural strength of the end plate to match and resist the expansion force of the cell. The first reinforcing boss arranged at the intersection may serve as a fixed support for the transverse reinforcement ribs and the longitudinal reinforcement rib to further improve the structural strength of the body, and may also reduce stress at the intersecting position of the reinforcement ribs and reduce the risk of fracture of the reinforcement ribs. The battery pack has high structural stability, and the vehicle has good performance.

Embodiments of the present disclosure further provide a front frame beam for a battery case, which has high reliability in constraining a wire harness.

A front frame beam for a battery case according to embodiments of the present application includes a front side beam, a rear cross beam, an intermediate longitudinal beam and a mounting bracket, in which the front side beam and the rear cross beam are arranged along a first direction, two ends of the front side beam are respectively connected to two ends of the rear cross beam, a front cavity is formed between the front side beam and the rear cross beam; the intermediate longitudinal beam is located in the front cavity and extends along the first direction, two ends of the intermediate longitudinal beam are respectively connected to the front side beam and the rear cross beam; the mounting bracket is located in the front cavity and connected to the intermediate longitudinal beam, and the mounting bracket has a first wire harness fixing position.

In the front frame beam for a battery case according to embodiments of the present application, the front cavity is formed between the front side beam and the rear cross beam, and the intermediate longitudinal beam is located in the front cavity and connects the front side beam and the rear cross beam. At this time, the mounting bracket is arranged at the intermediate longitudinal beam, and a wire harness in the front cavity is fixed to the mounting bracket through the first wire harness fixing position. The mounting bracket supports and fixes the wire harness in the front cavity, effectively preventing the wire harness from shaking with the vehicle during driving, which would otherwise pull a connection terminal of the wire harness, effectively ensuring the electrical connection reliability between an electrical component and a battery module.

In some embodiments, the front side beam includes a first vertical plate, a first horizontal plate, a second horizontal plate, a first reinforcing transverse rib and a first reinforcing vertical rib, in which the first vertical plate is connected to the intermediate longitudinal beam; the first horizontal plate and the second horizontal plate are both arranged on a side of the first vertical plate facing away from the intermediate longitudinal beam, the first horizontal plate and the second horizontal plate are respectively arranged at an upper end and a lower end of the first vertical plate, the first horizontal plate is provided with a plurality of waterproof clinch nuts spaced apart along a second direction, the second direction is orthogonal to the first direction; the first reinforcing transverse rib and the first reinforcing vertical rib are both located on the side of the first vertical plate facing away from the intermediate longitudinal beam, the first reinforcing vertical rib is connected to each of the first vertical plate, the first horizontal plate and the second horizontal plate.

In some embodiments, the front side beam further includes a mounting platform provided with an electrical component mounting position, the mounting platform being arranged on the side of the first vertical plate facing away from the intermediate longitudinal beam; and/or

the front side beam further includes a mounting boss provided with a second wire harness fixing position, the mounting boss being arranged on the side of the first vertical plate facing away from the intermediate longitudinal beam.

In some embodiments, the rear cross beam includes a second vertical plate, a third vertical plate, a second reinforcing vertical rib and a third reinforcing vertical rib, in which the second vertical plate and the second vertical plate are spaced apart along the first direction, the second vertical plate is located on a side of the third vertical plate facing away from the front side beam, the third vertical plate is connected to the intermediate longitudinal beam; the second reinforcing vertical rib and the third reinforcing vertical rib are arranged at an angle, the second reinforcing vertical rib and the third reinforcing vertical rib are located between the second vertical plate and the third vertical plate, the second reinforcing vertical rib connects the second vertical plate and the third vertical plate, and the third reinforcing vertical rib connects the second vertical plate and the third vertical plate.

In some embodiments, the rear cross beam further includes a bottom plate, the bottom plate connects the second vertical plate and the third vertical plate, and the bottom plate is provided with a mounting hole opposite a bottom guard plate.

In some embodiments, a plurality of intermediate longitudinal beams are provided and spaced apart along a second direction, and the second direction is orthogonal to the first direction.

In some embodiments, the intermediate longitudinal beam includes a fourth vertical plate, a fifth vertical plate and a fourth reinforcing vertical rib, in which the fourth vertical plate and the fifth vertical plate are spaced apart along a second direction, the second direction is orthogonal to the first direction, the fourth vertical plate and the fifth vertical plate are connected to the front side beam and the rear cross beam; the fourth reinforcing vertical rib is located between the fourth vertical plate and the fifth vertical plate and connects the fourth vertical plate and the fifth vertical plate.

In some embodiments, the mounting bracket includes:
a cylindrical boss arranged on at least one of the fourth vertical plate and the fifth vertical plate, the cylindrical boss extending along a height direction, the first wire harness fixing position includes a threaded hole arranged on a top surface of the cylindrical boss; and/or
a planar boss arranged on an upper end of at least one of the fourth vertical plate and the fifth vertical plate, a top surface of the planar boss constituting a wire harness support surface, the first wire harness fixing position includes a through hole in the wire harness support surface.

In some embodiments, the front frame beam for a battery case further includes a mounting structure, the mounting structure is arranged on a side of the front side beam facing away from the rear cross beam, and the mounting structure includes a plurality of vehicle mounting points.

In some embodiments, the mounting structure further includes a sixth vertical plate, a third horizontal plate, a second reinforcing transverse rib, a reinforcing longitudinal rib, a third reinforcing transverse rib and a fifth reinforcing vertical rib, in which the sixth vertical plate is connected to the front side beam; the third horizontal plate is arranged at an upper end of the sixth vertical plate, the vehicle mounting point is arranged on the third horizontal plate; the second reinforcing transverse rib connects the third horizontal plate and the vehicle mounting point, the reinforcing longitudinal rib connects the third horizontal plate and the vehicle mounting point; the third reinforcing transverse rib connects the fifth reinforcing vertical rib and the front side beam, the fifth reinforcing vertical rib connects each of the sixth vertical plate, the third horizontal plate and the front side beam.

In some embodiments, the front frame beam for a battery case further includes two side frames connected to an edge longitudinal beam of a battery case frame, a first end of the front side beam is connected to a first end of the rear cross beam through one of the side frames, and a second end of the front side beam is connected to a second end of the rear cross beam through the other side frame.

In some embodiments, the side frame includes a seventh vertical plate, a fourth reinforcing transverse rib and a sixth reinforcing vertical rib, in which the seventh vertical plate connects the front side beam and the rear cross beam, the seventh vertical plate has a welding bevel for welding to the edge longitudinal beam and a welding positioning hole; the fourth reinforcing transverse rib, the sixth reinforcing vertical rib and the seventh vertical plate are connected to each other in pairs.

A battery pack according to embodiments of the present application includes the front frame beam for a battery case according to any of the above embodiments.

The technical advantages of the battery pack according to embodiments of the present application are the same as the technical advantages of the front frame beam for a battery case of the above embodiments, and are not repeated here.

A vehicle according to embodiments of the present application includes the battery pack of the above embodiments.

The technical advantages of the vehicle according to embodiments of the present application are the same as the technical advantages of the battery pack of the above embodiment, and are not repeated here.

### BRIEF DESCRIPTION OF THE DRAWINGS

FIG. 1 is a schematic structural view of an end plate for a battery pack according to an embodiment of the present application;
FIG. 2 is a side view of an end plate for a battery pack according to an embodiment of the present application;
FIG. 3 is a top view of an end plate for a battery pack according to an embodiment of the present application;
FIG. 4 is an enlarged view of a partial structure of an end plate for a battery pack according to an embodiment of the present application;
FIG. 5 is an enlarged view of a partial structure of an end plate for a battery pack according to an embodiment of the present application;
FIG. 6 is a schematic structural view of a bottom plate of an end plate for a battery pack according to an embodiment of the present application;
FIG. 7 is a schematic structural view of a connection side plate of an end plate for a battery pack according to an embodiment of the present application;
FIG. 8 is an isometric view of a front frame beam for a battery case according to an embodiment of the present application;
FIG. 9 is a top view of a front frame beam for a battery case according to an embodiment of the present application;
FIG. 10 is a front view of a front frame beam for a battery case according to an embodiment of the present application;
FIG. 11 is a top view of a rear cross beam in a front frame beam for a battery case according to an embodiment of the present application;
FIG. 12 is a schematic view of an intermediate longitudinal beam in a front frame beam for a battery case according to an embodiment of the present application;
FIG. 13 is a schematic view of a mounting structure in a front frame beam for a battery case according to an embodiment of the present application; and
FIG. 14 is a schematic view of a side frame in a front frame beam for a battery case according to an embodiment of the present application.

### DETAILED DESCRIPTION

Embodiments of the present application are described in detail below, and examples of the embodiments are shown in the accompanying drawings. The embodiments described below with reference to the accompanying drawings are illustrative, and are intended to explain the present application, but are not to be construed as limiting the present application.

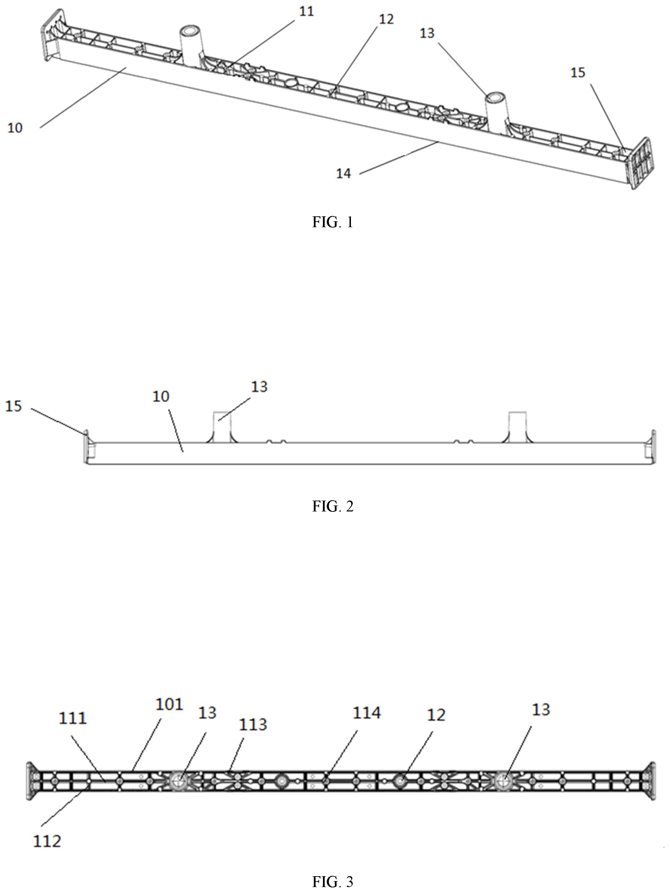

As shown in FIGS. 1 to 7, an end plate for a battery pack of embodiments of the present application includes a body 10 and a reinforcement assembly 11. The body 10 has a cavity, the reinforcement assembly is arranged in the cavity and includes a transverse reinforcement rib 112 and a longitudinal reinforcement rib 111 crossing each other, the longitudinal reinforcement rib 111 and the transverse reinforcement rib 112 are connected to an inner side wall of the cavity, and a first reinforcing boss 114 is arranged at an intersection of the longitudinal reinforcement rib 111 and the transverse reinforcement rib 112.

Specifically, taking FIGS. 1 to 6 as an example, the body 10 includes a bottom plate 14 and a peripheral plate connected to the bottom plate 14, the bottom plate 14 and the peripheral plate form the cavity, and the peripheral plate includes two large surface side plates 101 spaced apart in a longitudinal direction of the body 10 and connection side plates 15 connected to both ends of the two large surface side plates 101, two ends of the transverse reinforcement rib 112 are respectively connected to the two large surface side plates 101, and two ends of the longitudinal reinforcement rib 111 are respectively connected to the two connection side plates 15. Preferably, the transverse reinforcement rib 112 and the longitudinal reinforcement rib 111 are perpendicular to and intersect with each other.

It may be understood that the end plate for the battery pack is arranged at an end of a battery module, and the large surface side plate 101 is in direct contact with a cell. The expansion of the cell may squeeze the large surface side plate 101, and the reinforcement ribs arranged in the cavity may support the body 10 from the inside to avoid the body 10 from being squeezed and collapsed or damaged. In the present application, the transverse reinforcement rib 112 and the longitudinal reinforcement rib 111 are arranged to cross each other, which facilitates uniformly distributing pressure and has good deformation resistance. The first reinforcing boss arranged at the intersection may serve as a fixed support for the transverse reinforcement rib 112 and the longitudinal reinforcement rib 111 to further improve the structural strength of the end plate, and may also reduce stress at the intersecting position of the reinforcement ribs and reduce the risk of fracture of the reinforcement ribs.

In the end plate for a battery pack of embodiments of the present application, the body 10 has the cavity, the reinforcement assembly 11 includes the transverse reinforcement rib 112 and the longitudinal reinforcement rib 111, the transverse reinforcement rib 112 and the longitudinal reinforcement rib 111 are connected to an inner side wall of the cavity, and the first reinforcing boss 114 is arranged at the intersection of the longitudinal reinforcement rib 111 and the transverse reinforcement rib 112. Thus, the transverse reinforcement rib 112 and the longitudinal reinforcement rib 111 crossing each other may improve the structural strength of the body 10 to match and resist the expansion force of the cell. The first reinforcing boss 114 arranged at the intersection may serve as a fixed support for the transverse reinforcement rib 112 and the longitudinal reinforcement rib 111 to further improve the structural strength of the body 10, and may also reduce stress at the intersecting position of the reinforcement ribs and reduce the risk of fracture of the reinforcement ribs.

Preferably, the end plate is integrally die-cast from ADC12 or A380 material, which reduces the complexity of installation and manufacturing, and the use of a cast aluminum process may reduce the weight of the end plate and achieve lightweighting of structural components.

Preferably, the distance between the two large surface side plates 101 is between 20 mm and 50 mm.

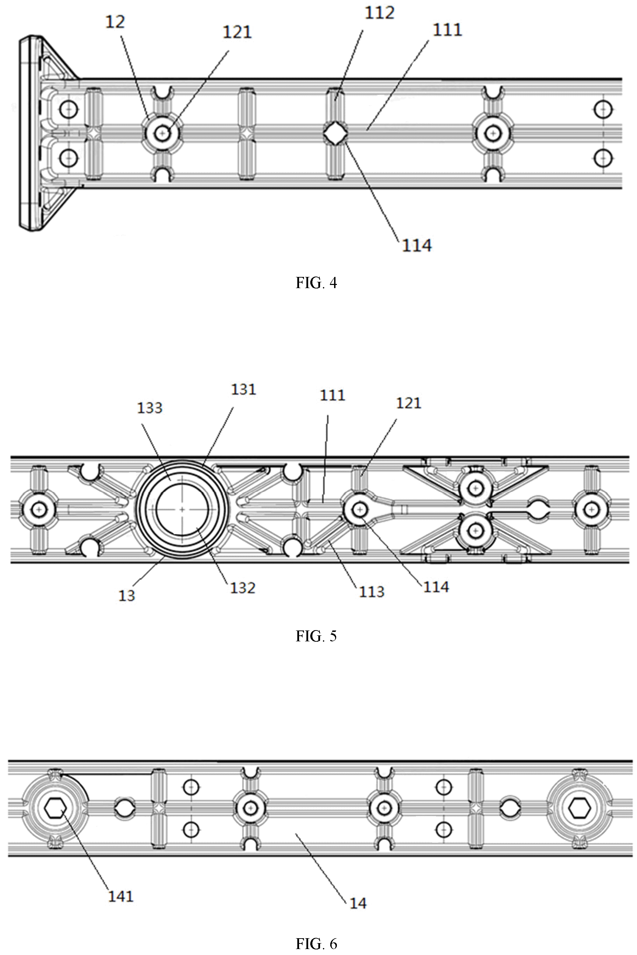

Further, as shown in FIGS. 3 and 5, the reinforcement assembly 11 further includes an oblique reinforcement rib 113, the oblique reinforcement rib 113 is arranged between the first reinforcing boss 114 and the inner side wall of the cavity, an extension direction of the oblique reinforcement rib 113 forms an angle with an extension direction of the transverse reinforcement rib 112, and the extension direction of the oblique reinforcement rib 113 forms an angle with an extension direction of the longitudinal reinforcement rib 111. Thus, the oblique reinforcement rib 113 may share the stress at the intersection of the transverse reinforcement rib 112 and the longitudinal reinforcement rib 111 to avoid tearing of the reinforcement ribs due to stress concentration, and may also increase the number of reinforcement ribs in a local area to further improve the structural strength of the body 10.

Preferably, a plurality of transverse reinforcement ribs 112 are provided and spaced apart in the longitudinal direction of the cavity, and a plurality of longitudinal reinforcement ribs 111 are provided and spaced apart in the width direction of the cavity. The plurality of transverse reinforcement ribs 112 and each longitudinal reinforcement rib 111 may form a plurality of intersection points spaced apart in the longitudinal direction of the cavity, and the distance between adjacent intersection points is between 5 mm and 30 mm.

Preferably, the layout space ratio of the transverse reinforcement ribs 112, the longitudinal reinforcement ribs 111 and the transverse reinforcement ribs 112 is between 10% and 70% of the cavity.

Preferably, a second reinforcing boss is arranged at a connection between the transverse reinforcement rib 112 and the inner side wall of the cavity, reducing stress concentration at the connection between the transverse reinforcement rib 112 and the inner wall of the cavity.

Preferably, a second reinforcing boss is arranged at a connection between the longitudinal reinforcement rib 111 and the inner side wall of the cavity, reducing stress concentration at the connection between the longitudinal reinforcement rib 111 and the inner wall of the cavity.

Preferably, a second reinforcing boss is arranged at a connection between the oblique reinforcement rib 113 and the inner side wall of the cavity, reducing stress concentration at the connection between the oblique reinforcement rib 113 and the inner wall of the cavity.

Further, as shown in FIG. 4, the cavity has an opening, a fixing boss 12 protruding toward the opening is arranged on an inner bottom wall of the cavity, and an end of the fixing boss 12 facing away from the inner bottom wall of the cavity has a connecting hole 121. It should be noted that when the end plate for a battery pack is assembled, in addition to being connected to a bottom plate 14 of the battery pack, it is also necessary to fit with some auxiliary brackets in the battery system. The fixing boss 12 may serve as a connecting column for fitting and connecting with the auxiliary bracket, and may also assist the reinforcement assembly 11 in reinforcing the body 10 as a whole.

Preferably, a plurality of fixing bosses 12 are provided and spaced apart from each other, and the specific layout form is based on actual assembly requirements.

Preferably, the height of the boss is between 5 mm and 150 mm, and may be specifically set according to assembly requirements.

Further, to ensure connection strength, the connecting hole 121 may be a threaded hole, and the depth of the connecting hole 121 is not less than 3 mm.

Optionally, the first reinforcing boss 114 and the second reinforcing boss may both be constructed as fixing bosses 12.

Further, as shown in FIG. 5, a support boss 13 is further arranged on the inner bottom wall of the cavity, and an end of the support boss 13 facing away from the inner bottom wall of the cavity protrudes out of the opening and is configured to support a cover plate of the battery pack. It should be noted that when the cover plate of the battery pack is squeezed by an external force, the cover plate is liable to be deformed. In the present application, by providing the support boss 13, the support boss 13 may support below the cover plate to solve the cover plate deformation problem caused by a highly integrated battery system, and the support boss 13 may also serve as a reinforcing column to assist the reinforcement assembly 11 in reinforcing the body 10 as a whole. Preferably, the protruding height of the support boss 13 relative to the body 10 is not less than 5 mm.

Specifically, the top end of the support boss 13 is a support plane 131, a groove 133 and an internal threaded hole 132 are arranged in the support plane 131, the groove 133 may be used to install a sealing ring to ensure the sealing effect between the support boss 13 and the cover plate, ensuring the waterproof and dustproof performance of the power battery system, and the internal threaded hole 132 is fixed to the upper cover plate by a fixing screw.

Preferably, as shown in FIG. 5, the support boss 13 is connected to the reinforcement assembly 11. Thus, the force of the support boss 13 may be uniformly applied to the body 10 through the reinforcement assembly 11, improving support reliability.

Preferably, the fixing boss 12 is connected to the reinforcement assembly 11.

Further, the bottom plate 14 of the body 10 is provided with a fixing hole 141. The fixing hole 141 includes but is not limited to hexagonal, circular or square shapes. The fixing hole 141 is used to insert a clinch screw or a clinch nut for fixing the end plate to the case.

The connection side plate 15 includes a main body plate and a peripheral edge 154 surrounding the periphery of the main body plate. The main body plate is provided with a reinforcing transverse rib 152 and a reinforcing vertical rib 153 to improve the structural strength of the main body plate. The main body plate is provided with an assembly hole 151. The peripheral edge 154 may be used to be welded and fixed to the case of the battery pack, and the assembly hole 151 may be used for positioning or fixed connection.

A battery pack of embodiments of the present application includes the end plate for a battery pack of the above embodiments.

In the battery pack of embodiments of the present application, by using the above end plate for a battery pack, the transverse reinforcement rib 112 and the longitudinal reinforcement rib 111 crossing each other are arranged in the cavity of the end plate, and the first reinforcing boss 114 is arranged at the intersection of the transverse reinforcement rib 112 and the longitudinal reinforcement rib 111. Thus, the transverse reinforcement rib 112 and the longitudinal reinforcement rib 111 crossing each other may improve the structural strength of the end plate to match and resist the expansion force of the cell. The first reinforcing boss 114 arranged at the intersection may serve as a fixed support for the transverse reinforcement rib 112 and the longitudinal reinforcement rib 111 to further improve the structural strength of the body 10, and may also reduce stress at the intersecting position of the reinforcement ribs and reduce the risk of fracture of the reinforcement ribs, and the battery pack has high structural stability.

A vehicle of embodiments of the present application includes the battery pack of the above embodiments.

In the vehicle of embodiments of the present application, by using the above battery pack, the transverse reinforcement rib 112 and the longitudinal reinforcement rib 111 crossing each other are arranged in the cavity of the end plate for the battery pack, and the first reinforcing boss 114 is arranged at the intersection of the transverse reinforcement rib 112 and the longitudinal reinforcement rib 111. Thus, the transverse reinforcement rib 112 and the longitudinal reinforcement rib 111 crossing each other may improve the structural strength of the end plate to match and resist the expansion force of the cell. The first reinforcing boss 114 arranged at the intersection may serve as a fixed support for the transverse reinforcement rib 112 and the longitudinal reinforcement rib 111 to further improve the structural strength of the body 10, and may also reduce stress at the intersecting position of the reinforcement ribs and reduce the risk of fracture of the reinforcement ribs. The battery pack has high structural stability, and the vehicle has good performance.

In addition, in the related art, a front frame beam for a battery case of a battery pack is often provided with some electrical components, and the electrical components are electrically connected to a battery module through a wire harness. The length of the wire harness connecting the electrical component and the battery module is generally greater than the distance between the electrical component and the battery module to avoid excessive tension and no buffer margin of the wire harness from affecting connection reliability. After the battery case is assembled, most of the wire harness is placed in a front cavity in the front frame beam for the battery case, and this portion of the wire harness is in a relaxed state or even suspended. In this case, during driving, the wire harness is liable to shake with the vehicle, and there is a risk that the connection terminal of the wire harness is subjected to excessive force and disengages from the electrical component or the battery module.

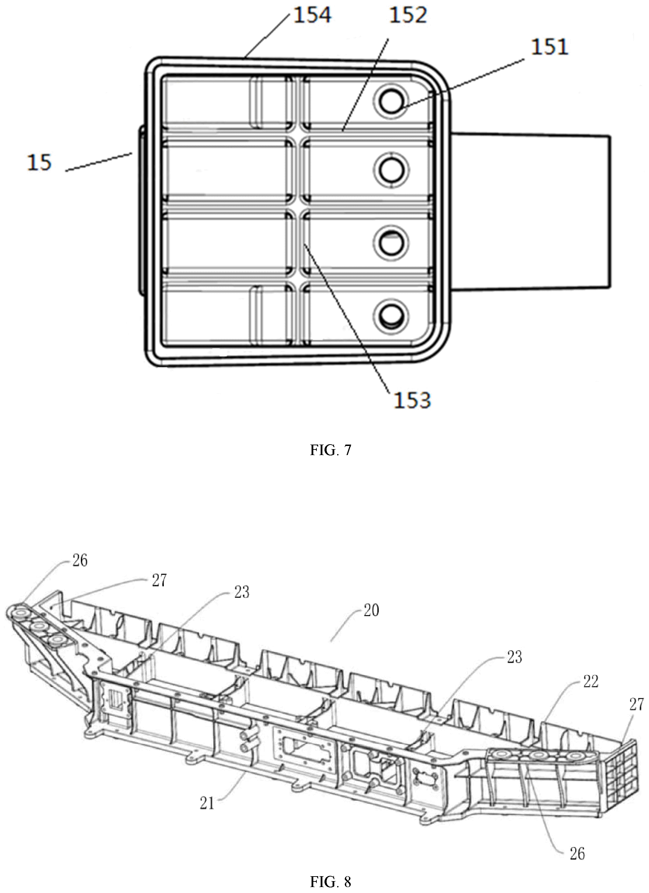

To at least to some extent solve one of the above technical problems in the related art, embodiments of the present application further provide a front frame beam 20 for a battery case. The following describes a front frame beam 20 for a battery case according to embodiments of the present application with reference to FIGS. 8 to 14.

A front frame beam 20 for a battery case according to embodiments of the present application includes a front side beam 21, a rear cross beam 22, an intermediate longitudinal beam 23 and a mounting bracket. The front side beam 21 and the rear cross beam 22 are arranged along a first direction, two ends of the front side beam 21 are respectively connected to two ends of the rear cross beam 22, and a front cavity is formed between the front side beam 21 and the rear cross beam 22. The intermediate longitudinal beam 23 is located in the front cavity and extends along the first direction, and two ends of the intermediate longitudinal beam 23 are respectively connected to the front side beam 21 and the rear cross beam 22. The mounting bracket is located in the front cavity and connected to the intermediate longitudinal beam 23, and the mounting bracket has a first wire harness fixing position.

In the front frame beam 20 for a battery case according to embodiments of the present application, the front cavity is formed between the front side beam 21 and the rear cross beam 22, and the intermediate longitudinal beam 23 is located in the front cavity and connects the front side beam 21 and the rear cross beam 22. At this time, the mounting bracket is arranged at the intermediate longitudinal beam 23, and a wire harness in the front cavity is fixed to the mounting bracket through the first wire harness fixing position. The mounting bracket supports and fixes the wire harness in the front cavity, effectively preventing the wire harness from shaking with the vehicle during driving, which would otherwise pull the connection terminal of the wire harness, effectively ensuring the electrical connection reliability between an electrical component and a battery module.

It should be noted that a plurality of intermediate longitudinal beams 23 are provided and spaced apart along a second direction, and the plurality of intermediate longitudinal beams 23 further improve the structural strength of the front frame beam 20 for the battery case. The first direction is the front-rear direction of the vehicle, and the second direction is the left-right direction of the vehicle. The front frame beam 20 for the battery case is integrally die-cast, i.e., the front side beam 21, the rear cross beam 22, the reinforcing beam 3 and the mounting bracket are integrally die-cast, omitting a welding process, and the manufacturing may be automatically performed using a mold, with high production efficiency.

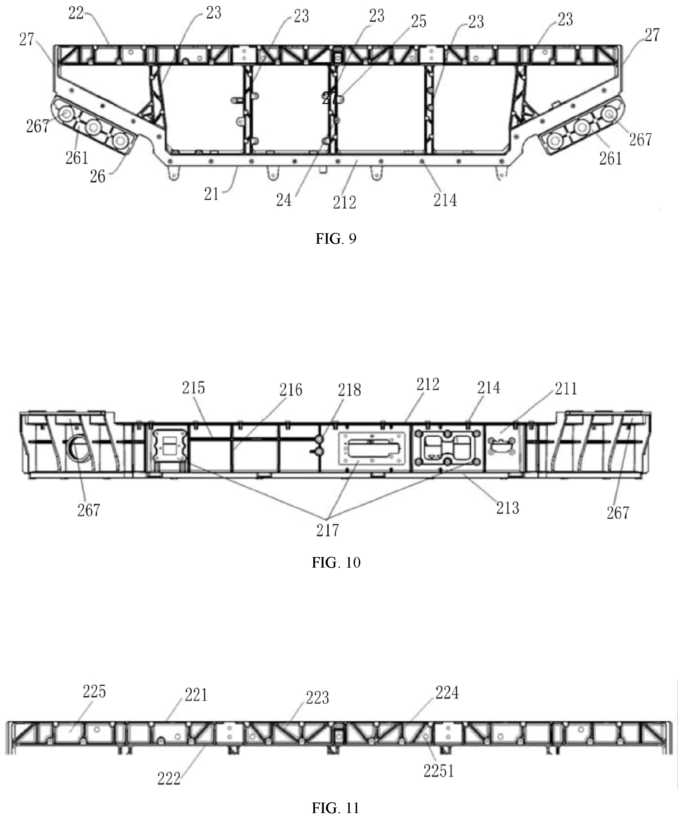

In some embodiments, as shown in FIGS. 8 and 10, the front side beam 21 includes a first vertical plate 211, a first horizontal plate 212, a second horizontal plate 213, a first reinforcing transverse rib 215 and a first reinforcing vertical rib 216. The first vertical plate 211 is connected to the intermediate longitudinal beam 23. The first horizontal plate 212 and the second horizontal plate 213 are both arranged on a side of the first vertical plate 211 facing away from the intermediate longitudinal beam 23, the first horizontal plate 212 and the second horizontal plate 213 are respectively arranged at an upper end and a lower end of the first vertical plate 211, the first horizontal plate 212 is provided with a plurality of waterproof clinch nuts 214 spaced apart along a second direction, and the second direction is orthogonal to the first direction. The first reinforcing transverse rib 215 and the first reinforcing vertical rib 216 are both located on the side of the first vertical plate 211 facing away from the intermediate longitudinal beam 23, and the first reinforcing vertical rib 216 is connected to each of the first vertical plate 211, the first horizontal plate 212 and the second horizontal plate 213.

A cover plate of the battery pack is connected to the first horizontal plate 212 through the waterproof clinch nuts 214 to achieve a sealed connection between the first horizontal plate 212 and the cover plate. The arrangement of the first reinforcing transverse rib 215 and the first reinforcing vertical rib 216 effectively improves the structural strength of the front side beam 21, the connection strength and bending strength between the first horizontal plate 212 and the first vertical plate 211 are high, and the connection stability between the front frame beam 20 for the battery case and the cover plate is higher.

Specifically, the front side beam 21 is connected to the intermediate longitudinal beam 23 and the rear cross beam 22 through the first vertical plate 211, and the front side beam 21 is generally a U-shaped frame with an opening facing forward. A plurality of first reinforcing vertical ribs 216 are provided and spaced apart along the second direction, and one first reinforcing transverse rib 215 is provided and connected to all the first reinforcing vertical ribs 216.

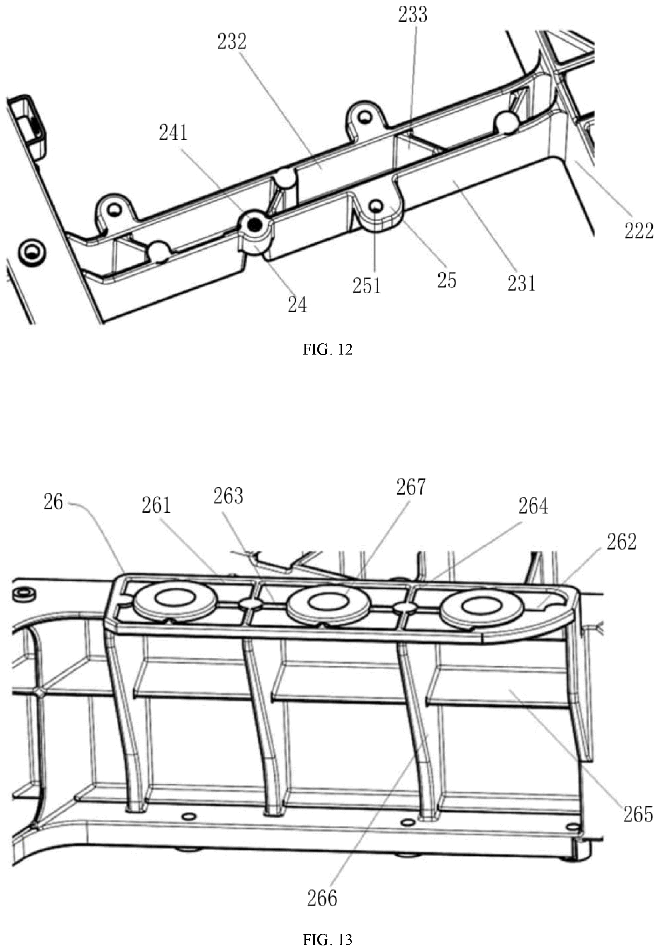

In some embodiments, as shown in FIGS. 9 and 12, the front side beam 21 further includes a mounting platform 217, the mounting platform 217 is provided with an electrical component mounting position, and the mounting platform 217 is arranged on the side of the first vertical plate 211 facing away from the intermediate longitudinal beam 23. That is, the electrical component is fixed to the mounting platform 217 through the electrical component mounting position, and the mounting platform 217 is integrally die-cast on the first vertical plate 211 of the front side beam 21, without the need to weld a corresponding mounting platform 217 on the first vertical plate 211, further reducing the manufacturing cost of the front frame beam 20 for the battery case.

Additionally or alternatively, the front side beam 21 further includes a mounting boss 218, the mounting boss 218 is provided with a second wire harness fixing position, and the mounting boss 218 is arranged on the side of the first vertical plate 211 facing away from the intermediate longitudinal beam 23. The mounting boss 218 is adjacent to the mounting platform 217. After the electrical component is mounted on the mounting platform 217, a wire harness electrically connected to the electrical component is fixed at the mounting boss 218 through the second wire harness fixing position, further avoiding the wire harness from being accidentally pulled and disconnected from the electrical connection with the electrical component.

Specifically, the mounting platform 217 is integrally die-cast with the first vertical plate 211, and a front side surface of the mounting platform 217 is machined by a milling process to form an electrical component mounting plane to ensure the mounting and fixing reliability of the electrical component. After the electrical component is mounted on the mounting platform 217, the electrical component is located on the front side of the first horizontal plate 212, and a wire harness connected to the electrical component is fixed at the mounting boss 218, further ensuring the electrical connection reliability between the wire harness and the electrical component.

In some embodiments, as shown in FIGS. 9 and 11, the rear cross beam 22 includes a second vertical plate 221, a third vertical plate 222, a second reinforcing vertical rib 223 and a third reinforcing vertical rib 224. The second vertical plate 221 and the second vertical plate 221 are spaced apart along the first direction, the second vertical plate 221 is located on a side of the third vertical plate 222 facing away from the front side beam 21, and the third vertical plate 222 is connected to the intermediate longitudinal beam 23. The second reinforcing vertical rib 223 and the third reinforcing vertical rib 224 are arranged at an angle, the second reinforcing vertical rib 223 and the third reinforcing vertical rib 224 are both located between the second vertical plate 221 and the third vertical plate 222, the second reinforcing vertical rib 223 connects the second vertical plate 221 and the third vertical plate 222, and the third reinforcing vertical rib 224 connects the second vertical plate 221 and the third vertical plate 222.

The second reinforcing vertical rib 223 and the third reinforcing vertical rib 224 arranged at an angle effectively improve the connection strength between the second vertical plate 221 and the third vertical plate 222, and the overall structural strength of the rear cross beam 22 is higher, which may better support the battery module.

Specifically, the second reinforcing vertical rib 223 is perpendicular to the second vertical plate 221 and the third vertical plate 222, the third reinforcing vertical rib 224 is an oblique rib, and each of the second vertical plate 221 and the third vertical plate 222 forms a stable triangular support structure with the third reinforcing vertical rib 224 and the second reinforcing vertical rib 223. A plurality of second reinforcing vertical ribs 223 and a plurality of third reinforcing vertical ribs 224 are provided and spaced apart along the second direction.

In some embodiments, as shown in FIG. 11, the rear cross beam 22 further includes a bottom plate 225, the bottom plate 225 connects the second vertical plate 221 and the third vertical plate 222, and the bottom plate 225 is provided with a mounting hole 2251 opposite a bottom guard plate.

A fastener passes through the mounting hole 2251 and is connected to the bottom guard plate to achieve the connection between the rear cross beam 22 and the bottom guard plate. The connection strength between the rear cross beam 22 and the bottom guard plate is high, and the connection reliability is high.

Specifically, the bottom plate 225 is also connected to the lower ends of the second reinforcing vertical ribs 223 and the third reinforcing vertical ribs 224, further improving the structural strength of the rear cross beam 22. The bottom plate 225 may be connected to the bottom guard plate by a threaded member passing through the mounting hole 2251 and being threadedly connected to the bottom guard plate.

In some embodiments, as shown in FIGS. 8 and 9, a plurality of intermediate longitudinal beams 23 are provided and spaced apart along a second direction, and the second direction is orthogonal to the first direction. The plurality of intermediate longitudinal beams 23 further improve the structural strength of the front frame beam 20 for the battery case.

In some embodiments, as shown in FIG. 12, the intermediate longitudinal beam 23 includes a fourth vertical plate 231, a fifth vertical plate 232 and a fourth reinforcing vertical rib 233. The fourth vertical plate 231 and the fifth vertical plate 232 are spaced apart along a second direction, the second direction is orthogonal to the first direction, and the fourth vertical plate 231 and the fifth vertical plate 232 are both connected to the front side beam 21 and the rear cross beam 22. The fourth reinforcing vertical rib 233 is located between the fourth vertical plate 231 and the fifth vertical plate 232 and connects the fourth vertical plate 231 and the fifth vertical plate 232.

The fourth reinforcing vertical rib 233 effectively improves the bending strength and support strength of the intermediate longitudinal beam 23, ensures that the intermediate longitudinal beam 23 may be first die-cast, and does not need to be designed as a solid structure, effectively meeting the lightweight requirement of the vehicle.

Specifically, a plurality of fourth reinforcing vertical ribs 233 are provided, and the fourth reinforcing vertical ribs 233 may be of two types, and the two types of fourth reinforcing vertical ribs 233 are arranged at an angle. Front ends of the fourth vertical plate 231 and the fifth vertical plate 232 are both connected to the first vertical plate 211 of the front side beam 21, and rear ends of the fourth vertical plate 231 and the fifth vertical plate 232 are both connected to the third vertical plate 222 of the rear cross beam 22.

In some embodiments, the mounting bracket includes a cylindrical boss 24, the cylindrical boss 24 is arranged on at least one of the fourth vertical plate 231 and the fifth vertical plate 232, the cylindrical boss 24 extends along a height direction, and the first wire harness fixing position includes a threaded hole 241 arranged on a top surface of the cylindrical boss 24. A threaded member is threadedly engaged with the threaded hole 241 to clamp a ground wire between a head of the threaded member and the cylindrical boss 24, achieving a grounding operation of the battery case frame.

Additionally or alternatively, the mounting bracket includes a planar boss 25, the planar boss 25 is arranged on an upper end of at least one of the fourth vertical plate 231 and the fifth vertical plate 232, a top surface of the planar boss 25 constitutes a wire harness support surface, and the first wire harness fixing position includes a through hole 251 in the wire harness support surface. A wire harness located in the front cavity is laid above the wire harness support surface. In this case, a cable tie may pass through the through hole 251 and bind the wire harness to achieve fixing of the wire harness on the intermediate longitudinal beam 23.

In some embodiments, as shown in FIGS. 8 and 9, the front frame beam 20 for a battery case further includes a mounting structure 26, the mounting structure 26 is arranged on a side of the front side beam 21 facing away from the rear cross beam 22, and the mounting structure 26 includes a plurality of vehicle mounting points 267.

The battery pack is connected to a vehicle body of the vehicle through the vehicle mounting points 267 to achieve installation of the battery pack on the vehicle. The mounting structure 26 is integrally die-cast with other components in the front frame beam 20 for the battery case, which effectively ensures the connection strength between the mounting structure 26 and the front side beam 21, and also further reduces the processing difficulty of the front frame beam 20 for the battery case, effectively meeting the automation requirement of production, and having high production efficiency.

Specifically, two mounting structures 26 are provided and spaced apart along the second direction.

In some embodiments, as shown in FIGS. 8, 9 and 13, the mounting structure 26 further includes a sixth vertical plate 261, a third horizontal plate 262, a second reinforcing transverse rib 263, a reinforcing longitudinal rib 264, a third reinforcing transverse rib 265 and a fifth reinforcing vertical rib 266. The sixth vertical plate 261 is connected to the front side beam 21. The third horizontal plate 262 is arranged at an upper end of the sixth vertical plate 261, and the vehicle mounting point 267 is arranged on the third horizontal plate 262. The second reinforcing transverse rib 263 connects the third horizontal plate 262 and the vehicle mounting point 267, and the reinforcing longitudinal rib 264 connects the third horizontal plate 262 and the vehicle mounting point 267. The third reinforcing transverse rib 265 connects the fifth reinforcing vertical rib 266 and the front side beam 21, and the fifth reinforcing vertical rib 266 connects each of the sixth vertical plate 261, the third horizontal plate 262 and the front side beam 21.

The second reinforcing transverse rib 263 and the reinforcing longitudinal rib 264 effectively improve the connection strength between the vehicle mounting point 267 and the third horizontal plate 262, and the third reinforcing transverse rib 265 and the fifth reinforcing vertical rib 266 effectively improve the connection strength between the third horizontal plate 262 and the sixth vertical plate 261 and the front side beam 21, so that the vehicle mounting point 267 is less likely to be deformed when subjected to a large impact force, and the installation reliability of the battery pack on the vehicle is higher.

Specifically, as shown in FIG. 13, each mounting structure 26 includes three vehicle mounting points 267, and the reinforcing longitudinal rib 264 connects the second reinforcing transverse rib 263 and the third horizontal plate 262. A plurality of fifth reinforcing vertical ribs 266 are provided and spaced apart along the second direction, and one third reinforcing transverse rib 265 is provided and connected to the first vertical plate 211 and all the fifth reinforcing vertical ribs 266.

In some embodiments, the front frame beam 20 for a battery case further includes two side frames 27 connected to an edge longitudinal beam of a battery case frame. A first end of the front side beam 21 is connected to a first end of the rear cross beam 22 through one of the side frames 27, and a second end of the front side beam 21 is connected to a second end of the rear cross beam 22 through the other side frame 27. The front frame beam 20 for the battery case is connected to the edge longitudinal beam of the battery case frame through the two side frames 27 by welding. The two side frames 27 are integrally die-cast with other components of the front frame for the battery case. The connection strength between the two side frames 27 and the front side beam 21 and the rear cross beam 22 is higher, and the connection between the front frame beam 20 for the battery case and the edge longitudinal beam is more stable and reliable.

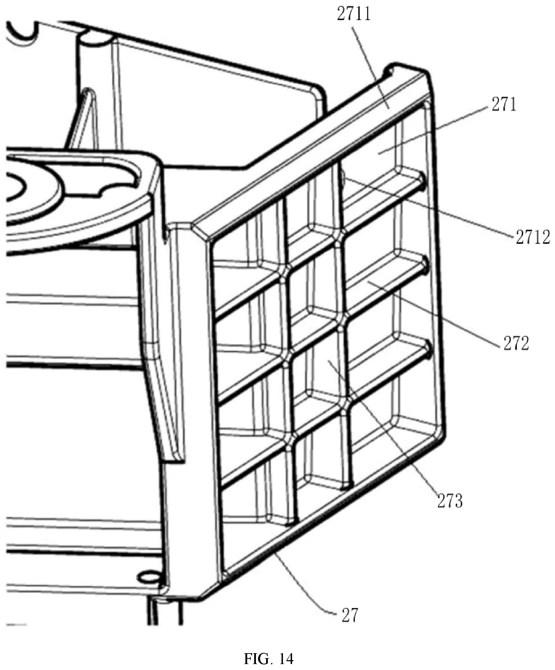

In some embodiments, as shown in FIG. 14, the side frame 27 includes a seventh vertical plate 271, a fourth reinforcing transverse rib 272 and a sixth reinforcing vertical rib 273. The seventh vertical plate 271 connects the front side beam 21 and the rear cross beam 22, and the seventh vertical plate 271 has a welding bevel 2711 for welding to the edge longitudinal beam and a welding positioning hole 2712. The fourth reinforcing transverse rib 272, the sixth reinforcing vertical rib 273 and the seventh vertical plate 271 are connected to each other in pairs.

A plurality of fourth reinforcing transverse ribs 272 and a plurality of sixth reinforcing vertical ribs 273 are arranged in a grid pattern, further ensuring the bending strength of the seventh vertical plate 271. After the seventh vertical plate 271 is connected to the edge longitudinal beam through the welding bevel 2711, the seventh vertical plate 271 is not easily deformed, and the connection stability between the front frame beam 20 for the battery case and the edge longitudinal beam is higher. At the same time, the design of the welding positioning hole 2712 effectively improves the connection accuracy between the front frame beam 20 for the battery case and the edge longitudinal beam.

In some embodiments, the front frame beam 20 for a battery case is integrally die-cast from an aluminum alloy. Thus, the weight of the front frame beam 20 for the battery case is lighter, better meeting the lightweight requirement of the vehicle.

A battery pack according to embodiments of the present application includes the front frame beam 20 for a battery case according to any of the above embodiments.

The technical advantages of the battery pack according to embodiments of the present application are the same as the technical advantages of the front frame beam 20 for a battery case of the above embodiments, and are not repeated here.

A vehicle according to embodiments of the present application includes the battery pack of the above embodiments.

The technical advantages of the vehicle according to embodiments of the present application are the same as the technical advantages of the battery pack of the above embodiments, and are not repeated here.

In the description of the present application, it is to be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on the orientations or positional relationships shown in the drawings. They are only for the convenience of describing the present application and simplifying the description, and do not indicate or imply that the device or element referred to must have a specific orientation, be constructed and operate in a specific orientation, and are not to be understood as limiting the present application.

In addition, the terms "first" and "second" are used for descriptive purposes only and are not to be understood as indicating or implying relative importance or implicitly indicating the number of technical features indicated. Thus, features defined with "first" and "second" may explicitly or implicitly include at least one of the features. In the description of the present application, "a plurality of" means at least two, for example, two, three, etc., unless otherwise specifically defined.

In the present application, unless otherwise expressly specified and limited, the terms "mounting", "connected", "connection", "fixing" and the like are to be understood in a broad sense, for example, they may be fixed connections, detachable connections, or integrated; they may be mechanical connections or electrical connections or communication with each other; they may be direct connections or indirect connections through an intermediate medium, and they may be internal communication between two elements or an interaction relationship between two elements, unless otherwise expressly limited. For a person of ordinary skill in the art, the specific meanings of the above terms in the present application may be understood according to specific circumstances.

In the present application, unless otherwise expressly specified and limited, a first feature being "above" or "below" a second feature may mean that the first and second features are in direct contact, or that the first and second features are in indirect contact through an intermediate medium. Moreover, a first feature being "above", "over" or "on top of" a second feature may mean that the first feature is directly above or obliquely above the second feature, or merely means that the first feature has a higher horizontal level than the second feature. A first feature being "below", "beneath" or "under" a second feature may mean that the first feature is directly below or obliquely below the second feature, or merely means that the first feature has a lower horizontal level than the second feature.

In the present application, the terms "an embodiment", "some embodiments", "example", "specific example", or "some examples" and the like mean that a specific feature, structure, material or characteristic described in connection with the embodiment or example is included in at least one embodiment or example of the present application. In this specification, the schematic representations of the above terms do not necessarily refer to the same embodiment or example. Furthermore, the specific feature, structure, material or characteristic described may be combined in any suitable manner in any one or more embodiments or examples. In addition, those skilled in the art may combine and combine the different embodiments or examples and the features of the different embodiments or examples described in this specification without contradicting each other.

Although the above embodiments have been shown and described, it is to be understood that the above embodiments are illustrative and are not to be construed as limiting the present application, and changes, modifications, substitutions and variations to the above embodiments may be made by a person of ordinary skill in the art within the scope of protection of the present application.

## Claims

1. An end plate for a battery pack, comprising a body and a reinforcement assembly, wherein the body has a cavity, the reinforcement assembly is arranged in the cavity and connected to an inner wall of the cavity, and the reinforcement assembly comprises a transverse reinforcement rib and a longitudinal reinforcement rib crossing each other, and a first reinforcing boss arranged at an intersection of the longitudinal reinforcement rib and the transverse reinforcement rib.

2. The end plate according to claim 1, wherein the reinforcement assembly further comprises an oblique reinforcement rib, the oblique reinforcement rib is arranged between the first reinforcing boss and an inner side wall of the cavity, an extension direction of the oblique reinforcement rib forms an angle with an extension direction of the transverse reinforcement rib, and the extension direction of the oblique reinforcement rib forms an angle with an extension direction of the longitudinal reinforcement rib.

3. The end plate according to claim 2, wherein a second reinforcing boss is arranged at a connection between the transverse reinforcement rib and the inner side wall of the cavity; and/or
a second reinforcing boss is arranged at a connection between the longitudinal reinforcement rib and the inner side wall of the cavity; and/or
a second reinforcing boss is arranged at a connection between the oblique reinforcement rib and the inner side wall of the cavity.

4. The end plate according to claim 1, wherein the cavity has an opening, a fixing boss protruding toward the opening is arranged on an inner bottom wall of the cavity, and an end of the fixing boss facing away from the inner bottom wall of the cavity has a connecting hole.

5. The end plate according to claim 4, wherein a support boss is further arranged on the inner bottom wall of the cavity, and an end of the support boss facing away from the inner bottom wall of the cavity protrudes out of the opening and is configured to support a cover plate of the battery pack.

6. The end plate according to claim 5, wherein the support boss is connected to the reinforcement assembly, and/or the fixing boss is connected to the reinforcement assembly.

7. The end plate according to any one of claims 1 to 6, wherein the body comprises a bottom plate and a peripheral plate connected to the bottom plate, the bottom plate and the peripheral plate form the cavity, and the peripheral plate comprises two large surface side plates spaced apart in a longitudinal direction of the body and connection side plates connected to both ends of the two large surface side plates, two ends of the transverse reinforcement rib are respectively connected to the two large surface side plates, and two ends of the longitudinal reinforcement rib are respectively connected to the two connection side plates.

8. The end plate according to claim 7, wherein the transverse reinforcement rib and the longitudinal reinforcement rib are perpendicular to and intersect with each other.

9. A front frame beam for a battery case, comprising a front side beam, an intermediate longitudinal beam, a mounting bracket and a rear cross beam, wherein the front side beam and the rear cross beam are arranged along a first direction, two ends of the front side beam are respectively connected to two ends of the rear cross beam, a front cavity is formed between the front side beam and the rear cross beam, the intermediate longitudinal beam is located in the front cavity and extends along the first direction, two ends of the intermediate longitudinal beam are respectively connected to the front side beam and the rear cross beam, the mounting bracket is located in the front cavity and connected to the intermediate longitudinal beam, and the mounting bracket has a first wire harness fixing position.

10. The front frame beam according to claim 9, wherein the front side beam comprises:
a first vertical plate connected to the intermediate longitudinal beam;
a first horizontal plate and a second horizontal plate both arranged on a side of the first vertical plate facing away from the intermediate longitudinal beam, the first horizontal plate and the second horizontal plate being respectively arranged at an upper end and a lower end of the first vertical plate, the first horizontal plate being provided with a plurality of waterproof clinch nuts spaced apart along a second direction, the second direction being orthogonal to the first direction; and
a first reinforcing transverse rib and a first reinforcing vertical rib both located on the side of the first vertical plate facing away from the intermediate longitudinal beam, the first reinforcing vertical rib being connected to each of the first vertical plate, the first horizontal plate and the second horizontal plate.

11. The front frame beam according to claim 10, wherein the front side beam further comprises a mounting platform provided with an electrical component mounting position, the mounting platform being arranged on the side of the first vertical plate facing away from the intermediate longitudinal beam; and/or
the front side beam further comprises a mounting boss provided with a second wire harness fixing position, the mounting boss being arranged on the side of the first vertical plate facing away from the intermediate longitudinal beam.

12. The front frame beam according to claim 9, wherein the rear cross beam comprises:
a second vertical plate and a third vertical plate spaced apart along the first direction, the second vertical plate being located on a side of the third vertical plate facing away from the front side beam, the third vertical plate being connected to the intermediate longitudinal beam; and
a second reinforcing vertical rib and a third reinforcing vertical rib, wherein the second reinforcing vertical rib and the third reinforcing vertical rib are arranged at an angle, the second reinforcing vertical rib and the third reinforcing vertical rib are located between the second vertical plate and the third vertical plate, the second reinforcing vertical rib connects the second vertical plate and the third vertical plate, and the third reinforcing vertical rib connects the second vertical plate and the third vertical plate.

13. The front frame beam according to claim 12, wherein the rear cross beam further comprises a bottom plate connecting the second vertical plate and the third vertical plate, the bottom plate being provided with a mounting hole opposite a bottom guard plate.

14. The front frame beam according to claim 9, wherein a plurality of intermediate longitudinal beams are provided and spaced apart along a second direction, and the second direction is orthogonal to the first direction.

15. The front frame beam according to claim 9, wherein the intermediate longitudinal beam comprises:
a fourth vertical plate and a fifth vertical plate spaced apart along a second direction, the second direction being orthogonal to the first direction, the fourth vertical plate and the fifth vertical plate being connected to the front side beam and the rear cross beam; and
a fourth reinforcing vertical rib located between the fourth vertical plate and the fifth vertical plate and connecting the fourth vertical plate and the fifth vertical plate.

16. The front frame beam according to claim 15, wherein the mounting bracket comprises:
a cylindrical boss arranged on at least one of the fourth vertical plate and the fifth vertical plate, the cylindrical boss extending along a height direction, and the first wire harness fixing position comprises a threaded hole arranged on a top surface of the cylindrical boss; and/or
a planar boss arranged on an upper end of at least one of the fourth vertical plate and the fifth vertical plate, a top surface of the planar boss constituting a wire harness support surface, and the first wire harness fixing position comprises a through hole in the wire harness support surface.

17. The front frame beam according to any one of claims 9 to 16, further comprising a mounting structure, wherein the mounting structure is arranged on a side of the front side beam facing away from the rear cross beam, and the mounting structure comprises a plurality of vehicle mounting points.

18. The front frame beam according to claim 17, wherein the mounting structure further comprises:
a sixth vertical plate connected to the front side beam;
a third horizontal plate arranged at an upper end of the sixth vertical plate, the vehicle mounting point being arranged on the third horizontal plate;
a second reinforcing transverse rib and a reinforcing longitudinal rib, the second reinforcing transverse rib connecting the third horizontal plate and the vehicle mounting point, the reinforcing longitudinal rib connecting the third horizontal plate and the vehicle mounting point; and
a third reinforcing transverse rib and a fifth reinforcing vertical rib, the third reinforcing transverse rib connecting the fifth reinforcing vertical rib and the front side beam, the fifth reinforcing vertical rib connecting each of the sixth vertical plate, the third horizontal plate and the front side beam.

19. The front frame beam according to claim 9, further comprising two side frames connected to an edge longitudinal beam of a battery case frame, wherein a first end of the front side beam is connected to a first end of the rear cross beam through one of the side frames, and a second end of the front side beam is connected to a second end of the rear cross beam through the other side frame.

20. The front frame beam according to claim 19, wherein the side frame comprises:
a seventh vertical plate connecting the front side beam and the rear cross beam, the seventh vertical plate having a welding bevel for welding to the edge longitudinal beam and a welding positioning hole; and
a fourth reinforcing transverse rib and a sixth reinforcing vertical rib, wherein the fourth reinforcing transverse rib, the sixth reinforcing vertical rib and the seventh vertical plate are connected to each other in pairs.

21. A battery pack, comprising:
the end plate according to any one of claims 1 to 8; or
the front frame beam according to any one of claims 9 to 20.

22. A vehicle, comprising:
the end plate according to any one of claims 1 to 8; or
the front frame beam according to any one of claims 9 to 20; or
the battery pack according to claim 21.
